(19) **Europäisches Patentamt / European Patent Office / Office européen des brevets**

(11) **EP 4 657 554 A1**

(12) **EUROPEAN PATENT APPLICATION**
published in accordance with Art. 153(4) EPC

(43) Date of publication:
**03.12.2025  Bulletin 2025/49**

(21) Application number: **24877538.9**

(22) Date of filing: **11.10.2024**

(51) International Patent Classification (IPC):
**H01M 4/1395** (2010.01)   **H01M 4/62** (2006.01)
**H01M 4/04** (2006.01)   **H01M 4/38** (2006.01)
**H01M 4/48** (2010.01)   **H01M 4/583** (2010.01)
**H01M 10/052** (2010.01)   **H01M 4/02** (2006.01)

(52) Cooperative Patent Classification (CPC):
**H01M 4/02; H01M 4/04; H01M 4/1395; H01M 4/38; H01M 4/48; H01M 4/583; H01M 4/62; H01M 10/052; Y02E 60/10**

(86) International application number:
**PCT/KR2024/015370**

(87) International publication number:
**WO 2025/080002 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.10.2023  KR 20230136902**
**10.10.2024  KR 20240137285**

(71) Applicant: **LG Energy Solution, Ltd.**
**Seoul 07335 (KR)**

(72) Inventors:
• **PARK, Junhyoung**
  **Daejeon 34122 (KR)**
• **KOO, Daeryung**
  **Daejeon 34122 (KR)**
• **LEE, Jaewook**
  **Daejeon 34122 (KR)**
• **KWON, Yohan**
  **Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR MANUFACTURING ANODE FOR LITHIUM SECONDARY BATTERY, ANODE MANUFACTURED THEREBY, AND LITHIUM SECONDARY BATTERY COMPRISING ANODE**

(57)   The present invention relates to a method for manufacturing a negative electrode for a lithium secondary battery, the method including: forming a negative electrode by transferring a lithium metal layer to at least one surface of a negative electrode active material layer including a negative electrode active material, a negative electrode conductive material, and a negative electrode binder, in which after the transfer of the lithium metal layer, a maximum temperature on a surface of the negative electrode is 35°C or lower; a negative electrode manufactured by the method, and a lithium secondary battery including the negative electrode, and can reduce the risk of ignition.

[Figure 1]

**Description**

[Technical Field]

This application claims priority to and the benefit of Korean Patent Application No. 10-2023-0136902 filed in the Korean Intellectual Property Office on October 13, 2023 and Korean Patent Application No. 10-2024-0137285 filed in the Korean Intellectual Property Office on October 10, 2024, the entire contents of which are incorporated herein by reference.
The present invention relates to a method for manufacturing a negative electrode for a lithium secondary battery, a negative electrode manufactured by the method, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.
At present, a secondary battery is a representative example of an electrochemical device that uses such electrochemical energy, and the above range of use thereof tends to be gradually expanding.
Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is actively being conducted on a method of manufacturing a high-density electrode with a higher energy density per unit volume as an electrode for such high-capacity lithium secondary batteries, and the trend is shifting toward higher loading to improve energy density.
In general, a secondary battery includes a positive electrode, a negative electrode, an electrolyte, and a separator. The negative electrode includes a negative electrode active material for intercalating and deintercalating lithium ions coming out from the positive electrode, and silicon-based particles having a high discharge capacity may be used as the negative electrode active material.
In general, a carbon material such as graphite is used for a negative electrode of a lithium secondary battery, but the theoretical capacity density of carbon is 372 mAh/g (833 mAh/cm$^3$). Therefore, in order to improve the energy density of the negative electrode, silicon (Si), tin (Sn), and oxides and alloys thereof, which are alloyed with lithium, are considered as negative electrode materials. Among them, silicon-based materials have attracted attention due to their low cost and high capacity (4200 mAh/g).
However, the silicon has a problem in that volume change (shrinkage or expansion) occurs during the intercalation/deintercalation of lithium ions, resulting in deterioration of mechanical stability, and as a result, cycle characteristics are impaired. Therefore, it is necessary to develop a material having structural stability, which is excellent in stability when used as an active material of an electrochemical device, and capable of ensuring cycle characteristics.
In addition, when a silicon-based negative electrode active material is used, a problem arises in that the initial irreversible capacity is large. In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, severe volume changes and surface side reactions occur, causing a large amount of lithium intercalated in the negative electrode during initial charging not to return to the positive electrode, thereby increasing the initial irreversible capacity. When the initial irreversible capacity increases, there occurs a problem that the battery capacity and the cycle are rapidly reduced.
In order to solve the above problems, a method for pre-lithiating a silicon negative electrode including a silicon-based negative electrode active material is known. As the pre-lithiation method, known methods include a method of manufacturing an electrode after lithiation by a physicochemical method such as electrolytic plating, lithium metal transfer, and lithium metal deposition, a method of electrochemically pre-lithiating a negative electrode, and the like.

[Citation List]

[Patent Literature]

Korean Patent Application Publication No. 10-2023-0114731

[Detailed Description of the Invention]

[Technical Problem]

The present invention has been made in an effort to provide a method for manufacturing a negative electrode for a lithium secondary battery, which can significantly reduce a risk of ignition due to heat accumulation by reducing heat generated during pre-lithiation, a negative electrode manufactured by the method, and a lithium secondary battery including a negative electrode.

[Technical Solution]

An exemplary embodiment of the present specification provides a method for manufacturing a negative electrode for a lithium secondary battery, the method comprising: forming a negative electrode by transferring a lithium metal layer to at least one surface of a negative electrode active material layer including a negative electrode active material, a negative electrode conductive material, and a negative electrode binder, wherein, after the transfer of the lithium metal layer, the maximum temperature on a surface of the negative electrode is 35°C or lower.

An exemplary embodiment of the present specification provides a lithium secondary battery comprising: a positive electrode for a lithium secondary battery; the negative electrode for a lithium secondary battery manufactured by the above-described method; a separator between the positive electrode for a lithium secondary battery and the negative electrode for a lithium secondary battery; and an electrolyte.

An exemplary embodiment of the present specification provides a lithium secondary battery comprising a positive electrode; a pre-lithiated negative electrode; a separator; and an electrolyte, wherein the pre-lithiated negative electrode comprises a negative electrode current collector layer, and a negative electrode active material layer provided on at least one surface of the negative electrode current collector layer, and the negative electrode active material layer has a surface hardness of 65 MPa or less.

An exemplary embodiment of the present specification provides a battery module or battery pack comprising the lithium secondary battery described above.

Further, an exemplary embodiment of the present specification provides a battery pack comprising the battery module described above.

[Advantageous Effects]

The method for manufacturing a negative electrode for a lithium secondary battery according to an exemplary embodiment of the present specification can manufacture a negative electrode for a lithium secondary battery having a significantly low surface temperature, thereby preventing heat from accumulating inside the negative electrode during a subsequent process of winding the negative electrode, which in turn prevents the temperature from rising to an ignition point and suppresses the ignition phenomenon of the negative electrode.

The method for manufacturing a negative electrode for a lithium secondary battery according to an exemplary embodiment of the present specification can manufacture a negative electrode for a lithium secondary battery with a lowered surface hardness by satisfying certain composition. As a result, during lithium transfer, pressure is evenly transmitted in a pressing step, significantly lowering the surface temperature of the pre-lithiated negative electrode. Furthermore, heat is prevented from accumulating inside the negative electrode during a subsequent process of winding the negative electrode, which in turn prevents the temperature from rising to an ignition point and suppresses the ignition phenomenon of the negative electrode.

[Brief Description of Drawings]

FIG. 1 is a flow chart showing a method for manufacturing a negative electrode for a lithium secondary battery according to an exemplary embodiment of the present specification.

FIG. 2 is a view showing a stack structure of a negative electrode for a lithium secondary battery manufactured according to an exemplary embodiment of the present invention.

FIG. 3 is a view showing a stack structure of a lithium secondary battery manufactured according to an exemplary embodiment of the present invention.

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by a BET method, and specifically, is calculated from the adsorption amount of nitrogen gas at the temperature of liquid nitrogen (77K) using BELSORP-mini II commercially available from BEL Japan Inc. That is, in the present specification, the BET specific surface area may refer to the specific surface area measured by the above measurement method.

In the present specification, "surface hardness" is measured by a micro-indenter, specifically, using the NX10 commercially available from Park Systems Corp., and may be measured in a displacement control manner while indenting a surface of the object with a diamond-made indenter at the same indentation speed of 3000 nm/min to an indentation depth of 5 $\mu$m. That is, in the present specification, the surface hardness may refer to the surface hardness measured by the above measurement method.

In the present specification, "Dn" refers to a particle size distribution, and refers to a particle diameter at the n% point in the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Note that the average particle diameter can be measured using a laser diffraction method. Specifically, the powder to be measured is dispersed in a dispersion medium and then introduced into a commercially available laser diffraction particle size measuring apparatus (e.g., Microtrac S3500), where a difference in diffraction patterns according to particle size is measured as the particles pass through the laser beam, thereby calculating the particle size distribution.

The measurement of the average particle diameter may be confirmed using water and Triton-X100 dispersant with a Microtrac apparatus (manufacturer: Microtrac model name: S3500). Specifically, the average particle diameter of a positive electrode active material may be measured under a condition of a refractive index of 1.5 to 1.7, and the average particle diameter of a negative electrode active material may be measured under a condition of a refractive index of 1.97 or 2.42. For example, after dispersing particles in a dispersion medium, the resulting dispersion is introduced into a commercially available laser diffraction particle size measuring device and irradiated with an ultrasonic wave of about 28 kHz with an output of 60 W. Thereafter, a cumulative volume particle size distribution graph is obtained, and then the average particle diameter may be determined by obtaining the particle size corresponding to 50% of the cumulative volume.

In an exemplary embodiment of the present specification, the particle size or particle diameter may refer to the average diameter or representative diameter of each grain forming metal powder.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

Hereinafter, preferred exemplary embodiments of the present invention will be described in detail. However, it should be understood that the exemplary embodiments of the present invention may be modified in various forms and the scope of the present invention is not limited to the exemplary embodiments described below.

A method for manufacturing a negative electrode for a lithium secondary battery according to an exemplary embodiment of the present specification includes a step of forming a negative electrode by transferring a lithium metal layer to at least one surface of a negative electrode active material layer including a negative electrode active material, a negative electrode conductive material, and a negative electrode binder, in which after the transfer of the lithium metal layer, the maximum temperature on a surface of the negative electrode is 35°C or lower.

In the related art, it is necessary to minimize heat generation from an electrode during direct contact pre-lithiation and the risk of resulting ignition. In particular, the pre-lithiation of a negative electrode using a silicon-based active material has a problem in that heat accumulates in the electrode due to the rapid exothermic reaction between lithium and the active material after lamination, significantly increasing the risk of ignition.

In this regard, the method for manufacturing a negative electrode for a lithium secondary battery according to an exemplary embodiment of the present specification, has a feature of preventing the surface temperature of the electrode from rising above 35°C after pre-lithiation, thereby significantly reducing the risk of ignition caused by heat accumulation during the winding of the electrode after the pre-lithiation, and also has a feature of adjusting a composition of the negative electrode active material layer to reduce the surface hardness of the negative electrode active material layer to a certain level or below, in order to lower the surface temperature of the negative electrode.

The method for manufacturing a negative electrode for a lithium secondary battery according to an exemplary embodiment of the present specification includes a step of forming a negative electrode by transferring a lithium metal layer to at least one surface of the negative electrode active material layer.

Specifically, in the method for manufacturing a negative electrode for a lithium secondary battery according to an exemplary embodiment of the present specification, the step of forming a negative electrode by transferring a lithium metal layer to at least one surface of the negative electrode active material layer may include steps of preparing a transfer laminate including a lithium metal layer and a base material layer; bringing the transfer laminate into contact with the negative electrode active material layer such that the lithium metal layer faces at least one surface of the negative electrode active material layer; and separating the base material layer from the lithium metal layer.

The method for manufacturing a negative electrode for a lithium secondary battery according to the present specification involves performing pre-lithiation on at least one surface of the negative electrode active material layer in order to improve the Coulombic efficiency by solving the irreversible problem of a silicon-based electrode, and features pre-lithiation by a transfer method, which enables lower cell degradation during battery operation and a faster reaction rate compared to pre-lithiation by a stabilized lithium metal powder (SLMP) method or an electrochemical method.

However, the pre-lithiation reaction is an exothermic reaction, and in particular, the pre-lithiation by the transfer method has a fast reaction rate, which may lead to problems such as the maximum temperature of the negative electrode surface rising to about 40°C or higher during the pre-lithiation, causing heat accumulation and resulting ignition. Therefore, in order to solve this problem, the present invention involves lowering the surface hardness of the negative electrode active material layer by adjusting the composition of the negative electrode active material layer, thereby preventing the surface temperature of the negative electrode, including the negative electrode active material layer and the negative electrode current collector layer, from rising above 35°C after pre-lithiation.

That is, in an exemplary embodiment of the present specification, the negative electrode with the lithium metal layer transferred to at least one surface of the negative electrode active material layer may have a maximum temperature of 35°C or lower on a surface where the lithium metal layer is transferred.

When the surface temperature of the negative electrode is 35°C or lower, the phenomenon of heat accumulation in certain areas without being released during the winding process of the negative electrode, which causes the temperature to rise to the ignition point, can be prevented.

In the method for manufacturing a negative electrode for a lithium secondary battery according to an exemplary embodiment of the present specification, the transfer laminate may include a lithium metal layer and a base material layer, in which the lithium metal layer is a layer including lithium metal for pre-lithiating at least one surface of the negative electrode active material layer, and a commonly used Li metal foil may be used, but is not limited thereto.

In an exemplary embodiment of the present specification, a thickness of the lithium metal layer may be 0.1 $\mu$m or greater and 15 $\mu$m or less, specifically 1 $\mu$m or greater and 13 $\mu$m or less, and more specifically 1 $\mu$m or greater and 10 $\mu$m or less.

In an exemplary embodiment of the present specification, when the thickness of the lithium metal layer falls within the above range, pre-lithiation can be achieved to a degree sufficient to compensate for the irreversible capacity, and lithium metal layer delamination is unlikely to occur, leading to a reduction in the likelihood of incomplete transfer.

In addition, in an exemplary embodiment of the present specification, the base material layer can be used without limitation as long as it has the characteristics of being able to withstand process conditions such as high temperatures during the step of depositing the lithium metal layer and prevent the problem of reverse delamination, where the lithium metal layer is transferred onto the base material layer during a winding process for transferring the deposited lithium metal layer.

Specifically, in an exemplary embodiment of the present specification, the base material layer may be one or more selected from the group consisting of polyethylene terephthalate (PET), polyimide (PI), (poly(methylmethacrylate)) (PMMA), polypropylene, polyethylene, and polycarbonate.

In an exemplary embodiment of the present specification, a thickness of the base material layer may fall within a range of 1 $\mu$m or greater and 300 $\mu$m or less, specifically 5 $\mu$m or greater and 200 $\mu$m or less, and more specifically 10 $\mu$m or greater and 100 $\mu$m or less.

When the thickness of the base material layer falls within the above range, the transfer of the lithium metal to the negative electrode active material layer can occur efficiently and the reverse transfer can be prevented.

In an exemplary embodiment of the present specification, a deposition method for depositing the lithium metal layer to the base material layer may be selected from a physical vapor deposition (PVD) method and a chemical vapor deposition (CVD) method, and among the physical vapor deposition methods, a thermal evaporation method may be mainly used. However, no such limitation is intended, and various deposition methods used in the art may be used.

In the method for manufacturing a negative electrode for a lithium secondary battery according to an exemplary embodiment of the present specification, the transfer laminate may further include a release layer between the lithium metal layer and the base material layer.

In an exemplary embodiment of the present specification, the release layer may be one or more selected from the group consisting of polycarbonate (PC), polydimethylsiloxane (PDMS), polymethylhydrosiloxane (PMHS), polyimide (PI), and polymethylmethacrylate (PMMA).

In an exemplary embodiment of the present specification, a thickness of the release layer may be 0.2 μm or greater and 3 μm or less, specifically 0.5 μm or greater and 1 μm or less.

In an exemplary embodiment of the present specification, when the thickness of the release layer falls within the above range, sufficient release force can be secured, and the release layer positioned on a surface after transfer of the lithium metal layer does not serve to block heat release, thereby preventing accelerated formation of by-products.

In an exemplary embodiment of the present specification, the release layer may be formed by a coating method. For example, the coating method may be a method selected from the group consisting of dip coating, spray coating, spin coating, die coating, gravure coating, micro-gravure coating, comma coating, and roll coating, but is not limited thereto, and various coating methods that can be used in the art to form a coating layer can be used.

In an exemplary embodiment of the present specification, the step of bringing the transfer laminate into contact with the negative electrode active material layer such that the lithium metal layer faces at least one surface of the negative electrode active material layer is a step for transferring lithium metal to the negative electrode active material layer.

Specifically, in an exemplary embodiment of the present specification, the step of bringing the transfer laminate into contact with the negative electrode active material layer such that the lithium metal layer faces at least one surface of the negative electrode active material layer may further include a pressing step, which has effects of enabling more active pre-lithiation on the negative electrode active material layer due to the transfer and the negative electrode to be formed thin despite a high energy density.

In this case, the transfer process may be performed by positioning the transfer laminate so that the lithium metal layer comes into contact with one surface or both surfaces of the negative electrode active material layer, and then performing roll pressing of applying a load of 10 kgf to 500 kgf to the transfer laminate. Thereafter, a process of removing the base material layer or the release layer and base material layer may be included.

In an exemplary embodiment of the present specification, the step of removing the base material layer or the release layer and base material layer may be performed after the lithium metal layer and the negative electrode active material layer are brought into contact with each other and then pressed for transfer.

In the method for manufacturing a negative electrode for a lithium secondary battery according to an exemplary embodiment of the present specification, pre-lithiation may proceed from the moment the lithium metal layer comes into contact with the negative electrode active material layer, from the pressing step, or from the step of removing the base material layer or the release layer and base material layer.

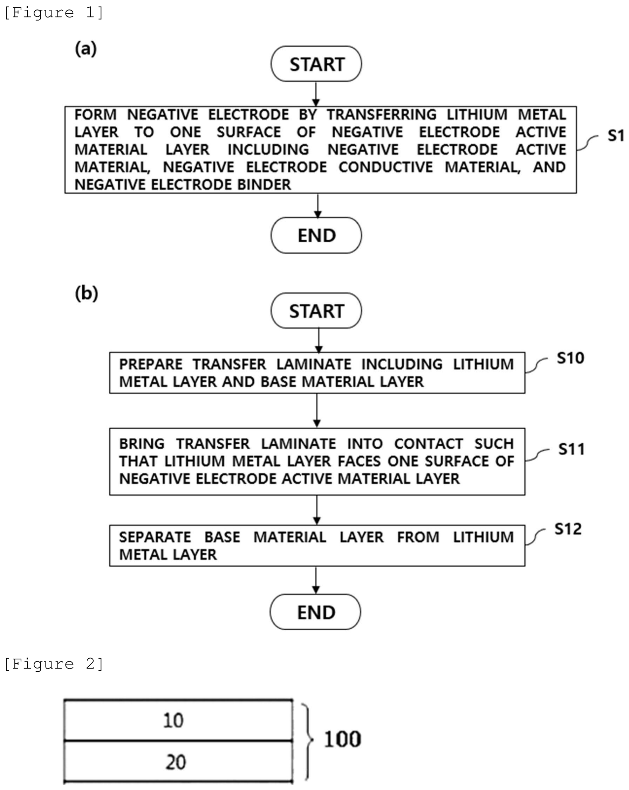

FIG. 1 is a flow chart showing a method for manufacturing a negative electrode for a lithium secondary battery according to an exemplary embodiment of the present specification. Specifically, FIG. 1(a) shows a method for manufacturing a negative electrode for a lithium secondary battery, including a step (S1) of forming a negative electrode by transferring a lithium metal layer to one surface of a negative electrode active material layer including a negative electrode active material, a negative electrode conductive material, and a negative electrode binder.

FIG. 1(b) shows a method for manufacturing a negative electrode for a lithium secondary battery, including a step (S10) of preparing a transfer laminate including a lithium metal layer and a base material layer; a step (S11) of bringing the transfer laminate into contact with a negative electrode active material layer such that the lithium metal layer faces one surface of a negative electrode active material layer; and a step (S12) of separating the base material layer from the lithium metal layer. In this case, a step (not shown) of providing a negative electrode active material layer on at least one surface of a negative electrode current collector layer according to an exemplary embodiment of the present specification may be performed before step S10, simultaneously with S10, or between S10 and S11, but no such limitation is intended.

A negative electrode manufactured according to the manufacturing method of an exemplary embodiment of the present specification described above refers to a pre-lithiated negative electrode.

The method for manufacturing a negative electrode for a lithium secondary battery according to an exemplary embodiment of the present specification further includes a step of forming a negative electrode active material layer, including a negative electrode active material, a negative electrode conductive material, and a negative electrode binder, on at least one surface of a negative electrode current collector layer.

In an exemplary embodiment of the present specification, the negative electrode active material layer may include a negative electrode active material, a negative electrode conductive material, and a negative electrode binder, the negative electrode active material may include a silicon-based active material, and the silicon-based active material may include one or more selected from the group consisting of Si, $SiO_x$ (0 < x < 2), Si/C, and a Si alloy.

In an exemplary embodiment of the present specification, the silicon-based active material may include one or more selected from the group consisting of Si and $SiO_x$ (0 < x < 2).

In an exemplary embodiment of the present specification, the negative electrode active material may use pure silicon (Si) as a silicon-based active material. The use of pure silicon (Si) as a negative electrode active material may mean that, based on 100 parts by weight of the total negative electrode active material, pure Si particles not bonded to other particles or elements may be included in an amount of 60 parts by weight or more, specifically 65 parts by weight or more, and more specifically 69 parts by weight or more, and 95 parts by weight or less, specifically 90 parts by weight or less, and more specifically 85 parts by weight or less.

In an exemplary embodiment of the present specification, the negative electrode active material may use $SiO_x$ ($0 < x < 2$) as a silicon-based active material, and the $SiO_x$ ($0 < x < 2$) corresponds to an amorphous matrix in the silicon-based active material. The $SiO_x$ ($0 < x < 2$) may be in a form partially including Si and $SiO_2$, and the Si may form a phase. That is, the above x corresponds to the number ratio of O to Si contained in the $SiO_x$ ($0 < x < 2$).

The silicon-based active material may be formed by heating and vaporizing mixed powder of Si powder and $SiO_2$ powder, and then depositing the vaporized mixed gas. Specifically, the mixed powder of Si powder and $SiO_2$ powder may be heat treated at 1400°C to 1800°C or 1400°C to 1600°C under vacuum.

In an exemplary embodiment of the present specification, the $SiO_x$ ($0 < x < 2$) may be included in an amount of 40 parts by weight or more, specifically 50 parts by weight or more, and more specifically 60 parts by weight or more, and 100 parts by weight or less, specifically 90 parts by weight or less, and more specifically 80 parts by weight or less based on 100 parts by weight of the negative electrode active material layer. When the silicon-based active material includes $SiO_x$ ($0 < x < 2$) within the above range, the discharge capacity of a lithium secondary battery can be improved.

In an exemplary embodiment of the present specification, the negative electrode active material may include metal impurities.

The metal impurities are impurities that may be included in silicon, and a content thereof may fall within a range of 0.1 parts by weight or less based on 100 parts by weight of the negative electrode active material layer.

Note that an average particle diameter (D50) of the silicon-based active material of the present specification may be 5 $\mu$m to 10 $\mu$m, specifically 5.5 $\mu$m to 8 $\mu$m, and more specifically 6 $\mu$m to 7 $\mu$m.

When the average particle diameter falls within the above range, a specific surface area of the particles falls within a suitable range, resulting in formation of the viscosity of the negative electrode slurry within an appropriate range. Accordingly, particles constituting the negative electrode slurry are smoothly dispersed. In addition, the size of the silicon-based active material has a value equal to or greater than the lower limit of the above range, resulting in an excellent contact area between the silicon-based active material particles and the conductive material due to a composite composed of the conductive material and binder in the negative electrode slurry, which increases the likelihood of maintaining a conductive network, thereby improving the capacity retention rate. Note that, when the average particle diameter falls within the above range, excessively large silicon-based active particles are excluded, resulting in formation of a smooth surface of the negative electrode. Accordingly, a phenomenon of current density non-uniformity during charging and discharging can be prevented.

In an exemplary embodiment of the present specification, the silicon-based active material generally has a characteristic BET specific surface area. The BET specific surface area of the silicon-based active material is preferably 0.01 $m^2$/g to 150.0 $m^2$/g, more preferably 0.1 $m^2$/g to 100.0 $m^2$/g, particularly preferably 0.2 $m^2$/g to 80.0 $m^2$/g, and most preferably 0.2 $m^2$/g to 18.0 $m^2$/g. The BET specific surface area is measured in accordance with DIN 66131 (using nitrogen).

In an exemplary embodiment of the present specification, the silicon-based active material may be present, for example, in a crystalline or amorphous form, and is preferably not porous. The silicon-based particles are preferably spherical or fragment-shaped particles. Alternatively, but less preferably, the silicon-based particles may also have a fiber structure or be present in the form of a silicon-containing film or coating.

In an exemplary embodiment of the present specification, the silicon-based active material may be included in an amount of 40 parts by weight or more based on 100 parts by weight of the total negative electrode active material layer.

In an exemplary embodiment of the present specification, the silicon-based active material may be included in an amount of 40 parts by weight or more, specifically 50 parts by weight or more, and more specifically 60 parts by weight or more, and 95 parts by weight or less, specifically 90 parts by weight or less, and more specifically 80 parts by weight or less based on 100 parts by weight of the total negative electrode active material layer.

In the charging and discharging reactions of the lithium secondary battery, lithium discharged from the positive electrode is intercalated into the negative electrode during charging, and is deintercalated from the negative electrode to return to the positive electrode again during discharging. In the case of the silicon-based negative electrode active material, the volume change and the surface side reaction are severe, so that a large amount of lithium intercalated in the negative electrode during initial charging does not return to the positive electrode again, and thus an initial irreversible capacity increases. When the initial irreversible capacity increases, there occurs a problem that the battery capacity and the cycle are rapidly reduced.

In the present invention, in order to solve the above problems, the negative electrode of the lithium secondary battery is pre-lithiated to solve the initial irreversible capacity problem. Specifically, the negative electrode is pretreated before the pre-lithiation process so that, in the pre-lithiation process, during the lithium transfer process, lithium metal can be easily transferred from a transfer laminate, and lithium in the negative electrode active material layer can be uniformly pre-lithiated.

In this case, the negative electrode active material layer according to an exemplary embodiment of the present specification uses a silicon-based active material with a significantly high capacity within the above range while using a negative electrode conductive material with a specific content, thereby enabling low surface hardness. As a result, during lithium transfer, pressure is evenly transmitted in the pressing step, preventing heat generated by the pre-lithiation from accumulating in certain areas of the negative electrode to thus lower the surface temperature of the lithium secondary battery.

In an exemplary embodiment of the present specification, the surface hardness of the negative electrode active material layer may be 65 MPa or less. In this case, the surface hardness refers to the surface hardness of a portion of the surface of the negative electrode active material layer where the lithium metal layer is to be transferred, and is measured by a micro-indenter. For example, the surface hardness may be measured while indenting a surface of the object with a diamond-made indenter at the same indentation speed of 3000 nm/min to an indentation depth of 5 $\mu$m.

In an exemplary embodiment of the present specification, the surface hardness of the negative electrode active material layer may be 65 MPa or less, specifically 10 MPa or greater and 65 MPa or less, and more specifically 20 MPa or greater and 63.5 MPa or less.

The negative electrode active material layer according to an exemplary embodiment of the present specification has the surface hardness within the above range, allowing, during lithium transfer, pressure to be evenly transmitted in the pressing process, thereby preventing heat generated by the pre-lithiation from accumulating in certain areas of the negative electrode to thus lower the surface temperature of the negative electrode.

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands and contracts repeatedly during the charging and discharging, resulting in damage to the conductive path formed in the negative electrode active material layer to degrade the performance of the battery. Therefore, a type of negative electrode conductive material that is used together with the silicon-based active material is important.

Accordingly, in an exemplary embodiment of the present specification, the negative electrode conductive material may include one or more selected from the group consisting of a planar conductive material, a linear conductive material, and a point like conductive material, and specifically, may include one or more selected from the group consisting of a planar conductive material and a linear conductive material.

In an exemplary embodiment of the present specification, the negative electrode conductive material may be included in an amount of 13 parts by weight or more and 40 parts by weight or less based on 100 parts by weight of the negative electrode active material layer.

Specifically, in the exemplary embodiment, the negative electrode conductive material may be included in an amount of 13 parts by weight or more and 40 parts by weight or less, specifically 15 parts by weight or more and 35 parts by weight or less, and more specifically 16 parts by weight or more and 30 parts by weight or less, based on 100 parts by weight of the negative electrode active material layer.

When the content of the negative electrode conductive material falls within the above range, the rollability of the electrode is enhanced without damaging the conductive path formed within the negative electrode active material layer, thereby lowering the level of heat generation during pre-lithiation.

In an exemplary embodiment of the present specification, the planar conductive material that is used as the negative electrode conductive material described above has a different structure and a role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a planar or plate-like shape, and may be expressed as plate-like graphite. That is, the planar conductive material is a material that is included so as to maintain a conductive path in the negative electrode active material layer, and refers to a material for securing a conductive path in a planar shape inside the negative electrode active material layer, rather than playing a role in storing and releasing lithium.

That is, in an exemplary embodiment of the present specification, the use of plate-like graphite as a negative electrode conductive material means that it is processed into a planar or plate-like shape and used as a material that secures a conductive path rather than a role of storing or releasing lithium. In this case, the negative electrode active material included together has high-capacity characteristics with respect to storing and releasing lithium, and serves to store and release all lithium ions transferred from the positive electrode.

On the other hand, in an exemplary embodiment of the present specification, the use of a carbon-based active material as an active material means that it is processed into a point-like or spherical shape and used as a material that plays a role in storing or releasing lithium.

In an exemplary embodiment of the present specification, the negative electrode conductive material may include a planar conductive material.

In the present specification, the "planar conductive material" refers to a conductive material with a two-dimensional (2D) structure, in which atoms form a crystal structure on a plane with a thickness of a single atomic layer or multiple atomic layers of two or more layers. The planar conductive material refers to a material for securing a conductive path in a planar form within the negative electrode active material layer, and at the same time can play a role in suppressing disconnection of the conductive path due to volume expansion.

In an exemplary embodiment of the present specification, the planar conductive material may include at least one selected from the group consisting of plate-like graphite, graphene, graphene oxide, and graphite flake, and preferably may be plate-like graphite.

In an exemplary embodiment of the present specification, an average particle diameter (D50) of the planar conductive material may be 2 $\mu$m to 7 $\mu$m, specifically 3 $\mu$m to 6 $\mu$m, and more specifically 3 $\mu$m to 5 $\mu$m. When the above range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present specification, the planar conductive material may have a D10 of 0.5 $\mu$m or greater and 1.7 $\mu$m or less, a D50 of 2.5 $\mu$m or greater and 3.5 $\mu$m or less, and a D90 of 6.8 $\mu$m or greater and 15.0 $\mu$m or less.

In an exemplary embodiment of the present specification, for the planar conductive material, a planar conductive material with a high specific surface area having a high BET specific surface area or a planar conductive material with a low specific surface area may be used.

In an exemplary embodiment of the present specification, for the planar conductive material, a planar conductive material with a high specific surface area or a planar conductive material with a low specific surface area may be used without limitation. However, in particular, the planar conductive material according to the present specification can affect the electrode performance to some extent due to the dispersion, so that a planar conductive material with a low specific surface area, which does not cause a problem in dispersion, may be used preferably.

In an exemplary embodiment of the present specification, the planar conductive material may have a BET specific surface area of 5 m$^2$/g or greater.

In another exemplary embodiment, the planar conductive material may have a BET specific surface area of 5 m$^2$/g or greater and 500 m$^2$/g or less, preferably 5 m$^2$/g or greater and 300 m$^2$/g or less, and more preferably 5 m$^2$/g or greater and 250 m$^2$/g or less.

In another exemplary embodiment, the planar conductive material is a planar conductive material with a high specific surface area, and the BET specific surface area may fall within a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may fall within a range of 5 m$^2$/g or greater and 40 m$^2$/g or less, preferably 5 m$^2$/g or greater and 30 m$^2$/g or less, and more preferably 5 m$^2$/g or greater and 25 m$^2$/g or less.

In an exemplary embodiment of the present specification, the negative electrode conductive material may include a planar conductive material, and the planar conductive material may be included in an amount of 15 parts by weight or more based on 100 parts by weight of the negative electrode active material layer.

In an exemplary embodiment of the present specification, the planar conductive material may be included in an amount of 15 parts by weight or more and 40 parts by weight or less, specifically 16 parts by weight or more and 35 parts by weight or less, and more specifically 20 parts by weight or more and 30 parts by weight or less based on 100 parts by weight of the negative electrode active material layer.

When the planar conductive material falls within the above range, a conductive path is secured, while the surface hardness of the negative electrode active material layer can be appropriately reduced to make it soft, allowing pressure to be evenly transmitted to the soft negative electrode active material layer in the pressing step during lithium transfer and preventing heat from accumulating in any specific region during pre-lithiation. At the same time, the negative electrode active material can be included in an appropriate amount, preventing the electrode from becoming excessively thick.

In an exemplary embodiment of the present specification, the negative electrode conductive material may include a linear conductive material.

In the present specification, the "linear conductive material" refers to a conductive material with a one-dimensional (1D) structure having a diameter in the nanometer order and a high aspect ratio, or a conductive material having a fibrous structure such as a cylindrical type or a tube type. Examples of the linear conductive material include carbon nanotubes, and the carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side or are entangled in such an orientation that longitudinal axes of the carbon nanotube units are substantially the same. The carbon nanotube unit has a graphite sheet in the shape of a cylinder with a nanoscale diameter and has an sp$^2$ bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present specification, the negative electrode conductive material may include one or more selected from the group consisting of plate-like graphite, single-walled carbon nanotubes (SWCNTs), and multi-walled carbon nanotubes (MWCNTs), but is not limited thereto.

In an exemplary embodiment of the present specification, the linear conductive material may have a BET specific surface area of 100 $m^2$/g or greater and 10,000 $m^2$/g or less, preferably 500 $m^2$/g or greater and 5,000$m^2$/g or less, and more preferably 1,000 $m^2$/g or greater and 1,500 $m^2$/g or less.

In addition, in an exemplary embodiment of the present specification, the aspect ratio of the linear conductive material may be 500 or greater, preferably 1,000 or greater, and more preferably 10,000 or greater, and 1,000,000 or less, preferably 100,000 or less.

In an exemplary embodiment of the present specification, when the linear conductive material falls within the above ranges of the BET specific surface area and aspect ratio, deterioration of the conductive path due to volume changes of the negative electrode active material is prevented, thereby maintaining or improving life performance.

In an exemplary embodiment of the present specification, the negative electrode conductive material may further include a point-like conductive material.

The point-like conductive material refers to a conductive material that may be used to improve conductivity of a negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present specification, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less.

In an exemplary embodiment of the present specification, a particle diameter of the point-like conductive material may be 10 nm to 100 nm, preferably 20 nm to 90 nm, and more preferably 20 nm to 60 nm.

The negative electrode conductive material according to the present specification has a completely different composition from a conductive material that is applied to the positive electrode. That is, the negative electrode conductive material according to the present specification serves to support a contact point between silicon-based active materials, which undergo a large volume expansion of the electrode due to charging and discharging, and is completely different in composition and role from the positive electrode conductive material that serves to impart partial conductivity while playing a buffer role as a cushioning agent when rolled.

In addition, the negative electrode conductive material according to the present specification is applied to a silicon-based negative electrode active material and has a completely different composition from that of the conductive material applied to a graphite-based active material. That is, the conductive material used for an electrode having a graphite-based active material simply has small particles with respect to the active material, and thus has the characteristics of enhancing output characteristics and imparting partial conductivity, and the composition and role thereof are completely different from those of the negative electrode conductive material applied together with a silicon-based negative electrode active material as in the present invention.

In an exemplary embodiment of the present specification, the negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyacrylamide, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene butadiene rubber (SBR), fluoro rubber, poly acrylic acid, and materials in which hydrogen thereof is substituted with Li, Na, Ca, or the like, and may also include various copolymers thereof.

According to an exemplary embodiment of the present specification, the negative electrode binder serves to support the active material and conductive material in order to prevent distortion and structural deformation of the negative electrode structure during the volume expansion and relaxation of the silicon-based active material. When the role is satisfied, all general binders can be applied, specifically, one or more binders selected from the group consisting of a polyacrylamide (PAM) and styrene butadiene rubber may be included.

In an exemplary embodiment of the present specification, the negative electrode binder may be included in an amount of 1 part by weight or more and 30 parts by weight or less, specifically 3 parts by weight or more and 20 parts by weight or less, and more specifically 5 parts by weight or more and 10 parts by weight or less based on 100 parts by weight of the total negative electrode active material layer.

In an exemplary embodiment of the present invention, a weight average molecular weight of the binder may be 100,000 g/mol or more and 1,500,000 g/mol or less.

When the weight average molecular weight of the negative electrode binder falls within the above range, the mechanical strength is excellent, and the interaction between molecules is high, resulting in excellent binding force of the electrodes. In addition, when the above range is satisfied, the viscosity of the binder can be set within an appropriate range, which can further improve the coatability of an electrode when a negative electrode is manufactured using the same.

The negative electrode according to an exemplary embodiment of the present specification may include the above-described negative electrode active material, a negative electrode conductive material, and a negative electrode binder.

Specifically, the negative electrode may include a negative electrode current collector layer and a negative electrode active material layer provided on at least one surface of the negative electrode current collector layer. The negative electrode active material layer may include the negative electrode active material described above. Furthermore, the negative electrode active material layer may further include a thickener.

FIG. 2 is a view showing a stack structure of a negative electrode for a lithium secondary battery according to an exemplary embodiment of the present specification. Specifically, a negative electrode 100 for a lithium secondary battery including a negative electrode active material layer 20 on one surface of a negative electrode current collector layer 10 can be seen. FIG. 2 shows that the negative electrode active material layer is formed on one surface of the negative electrode current collector layer, but the negative electrode active material layer may be formed on both surfaces of the negative electrode current collector layer.

In an exemplary embodiment of the present specification, the negative electrode current collector layer may generally have a thickness of 1 $\mu$m to 100 $\mu$m. The negative electrode current collector layer is not particularly limited as long as it has high conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used. In addition, the negative electrode current collector layer may be formed to have a surface with fine irregularities to enhance the bonding strength with the negative electrode active material and may be used in various forms, such as a film, a sheet, a foil, a net, a porous body, a foamed body, or a non-woven fabric.

In an exemplary embodiment of the present specification, a thickness of the negative electrode current collector layer may be 1 $\mu$m to 100 $\mu$m, and a thickness of the negative electrode may be 20 $\mu$m or greater and 500 $\mu$m or less. However, the thickness may be variously modified depending on a type and a use of negative electrode used, and is not limited thereto.

The negative electrode active material layer may be formed by coating at least one surface of the negative electrode current collector layer with a negative electrode slurry, including a negative electrode active material, a negative electrode binder, a negative electrode conductive material, and/or a thickener. This means that the negative electrode active material layer may be formed by applying the negative electrode slurry to at least one surface of the negative electrode current collector layer, followed by drying and rolling.

In an exemplary embodiment of the present specification, the negative electrode slurry may include a negative electrode active material layer composition including the negative electrode active material, a negative electrode binder, a negative electrode conductive material, and/or a thickener; and a slurry solvent.

In an exemplary embodiment of the present specification, a solid content of the negative electrode slurry may fall within a range of 5% or more and 40% or less.

In another exemplary embodiment, the solid content of the negative electrode slurry may fall within a range of 5% or more and 40% or less, preferably 7% or more and 35% or less, and more preferably 10% or more and 30% or less.

The solid content of the negative electrode slurry may refer to a content of the negative electrode active material layer composition included in the negative electrode slurry, and may refer to a content of the negative electrode active material composition based on 100 parts by weight of the negative electrode slurry.

When the solid content of the negative electrode slurry falls within the above range, an appropriate viscosity is secured when forming a negative electrode active material layer, thereby minimizing particle agglomeration of the negative electrode active material layer composition and enabling efficient formation of the negative electrode active material layer.

In an exemplary embodiment of the present specification, the solvent may include those known in the art. For example, the solvent may be water (e.g., distilled water) or NMP (N-methyl-2-pyrrolidone).

According to an exemplary embodiment of the present specification, the negative electrode may be formed by coating and drying the negative electrode slurry on one surface or both surfaces of a negative electrode current collector layer, and the slurry solvent in the negative electrode slurry may be dried through the drying step.

In an exemplary embodiment of the present specification, the negative electrode active material layer may be pre-lithiated on at least one surface. That is, in an exemplary embodiment of the present specification, the negative electrode active material layer may be pre-lithiated on one surface, or pre-lithiated on both surfaces.

lithium secondary batteries undergo lithium loss from the first charge after a battery is manufactured. During subsequent charge/discharge cycles and high-temperature storage periods, lithium loss continues to occur, leading to battery degradation. To compensate for the lithium loss, lithium is additionally introduced into a battery before the battery operates, which is referred to as pre-lithiation. The negative electrode for a lithium secondary battery according to an exemplary embodiment of the present specification can increase the battery capacity and improve the battery life, as at least one surface of the negative electrode active material layer is pre-lithiated.

In an exemplary embodiment of the present specification, the pre-lithiation may be performed by a lithium electrolytic plating process, a lithium metal transfer process, a lithium metal deposition process, or a stabilized lithium metal powder (SLMP) coating process, and specifically a process of introducing, as an additive, a compound containing an excessive amount of lithium during battery manufacturing, a process of depositing a lithium metal thin film on a surface of an electrode active material to manufacture an electrode assembly and then injecting an electrolyte so that lithium diffuses into the negative electrode active material, thereby enabling pre-lithiation, a process of enabling a pre-lithiation reaction to spontaneously progress by bringing a lithium metal and an electrode into direct contact under dry room conditions, a process of adding lithium, in an amount to be consumed during first charging, to an electrode in the form of stabilized metal powder, or the like.

In an exemplary embodiment of the present specification, the pre-lithiation may be performed by a lithium metal transfer process. When the pre-lithiation is performed by the lithium metal transfer process, lithium loss can be minimized, and the reaction speed is fast, making it applicable to mass production.

In this case, whether the negative electrode in the present specification is pre-lithiated can be confirmed by an increase in the weight of the entire manufactured negative electrode due to lithium introduced into the negative electrode active material layer, compared to its weight before pre-lithiation. In this case, the weight increase due to lithium introduced into the negative electrode active material layer by pre-lithiation may be approximately 5% or more. The weight of the negative electrode and lithium can be measured inside a glove box or glove compartment filled with argon (Ar) gas, using a balance capable of measuring from mg to μg.

Alternatively, whether the negative electrode in the present specification is pre-lithiated can be indirectly confirmed by an increase in the charge/discharge efficiency to 85% or more during the first charge/discharge cycle of the finally manufactured battery, and the charge/discharge efficiency can be confirmed by measuring the charge and discharge capacities of the battery and calculating the same according to Formula A-1 below.

charge/discharge efficiency = (discharge capacity/charge capacity) $\times$ 100 (%)         Formula A-1

Alternatively, whether the negative electrode in the present specification is pre-lithiated can be confirmed by a change in color of the negative electrode active material layer. Before pre-lithiation, the negative electrode active material layer is black. After pre-lithiation, the carbon-based negative electrode active material layer changes to gold, while the silicon-based negative electrode active material layer changes to green or purple. Such a color change is attributed to production of nitrogen oxides by side reactions.

The description of the pre-lithiation step by the aforementioned transfer method may be applied to the description of the pre-lithiation.

A lithium secondary battery according to an exemplary embodiment of the present specification may include: a positive electrode for a lithium secondary battery; a negative electrode for a lithium secondary battery manufactured by the manufacturing method described above; a separator provided between the positive electrode for a lithium secondary battery and the negative electrode for a lithium secondary battery; and an electrolyte, and the negative electrode for a lithium secondary battery is the same as the negative electrode for a lithium secondary battery described above. Since the negative electrode for a lithium secondary battery has been described above, a detailed description will be omitted.

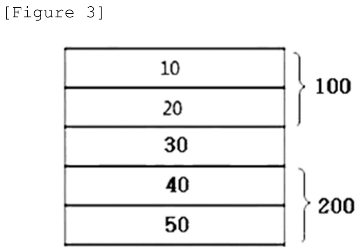

FIG. 3 is a diagram showing a laminated structure of a lithium secondary battery according to an exemplary embodiment of the present specification. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and it is shown that the negative electrode 100 for a lithium secondary battery and the positive electrode 200 for a lithium secondary battery are formed in a structure in which they are stacked with a separator 30 interposed therebetween. In this case, the negative electrode for a lithium secondary battery may be manufactured according to a manufacturing method according to an exemplary embodiment of the present specification.

A lithium secondary battery according to another exemplary embodiment of the present specification is a lithium secondary battery including a positive electrode; a pre-lithiated negative electrode; a separator; and an electrolyte, in which the pre-lithiated negative electrode includes a negative electrode current collector layer and a negative electrode active material layer provided on at least one surface of the negative electrode current collector layer, and the negative electrode active material layer may have a surface hardness of 65 MPa or less.

In this case, the pre-lithiated negative electrode is the same as the negative electrode formed by transferring a lithium metal layer to at least one surface of the above-described negative electrode active material layer, and the same descriptions as those of the above-described negative electrode active material layer, lithium metal layer, and the like can all be applied.

In the present specification, when the surface hardness of the negative electrode active material layer falls within the range of 65 MPa or less, the pressure is evenly transmitted in the pressing process during lithium transfer, preventing heat generated by the pre-lithiation from accumulating in certain areas of the negative electrode to thus lower the surface temperature of the lithium secondary battery. The surface hardness may be specifically 60 MPa or less.

The range of the surface hardness of the negative electrode active material layer can be satisfied by adjusting the content of the negative electrode conductive material, specifically, the content of the planar conductive material.

Specifically, in another exemplary embodiment of the present specification, the negative electrode active material layer may include a negative electrode active material, a negative electrode conductive material, and a negative electrode binder, the negative electrode conductive material may include one or more selected from the group consisting of a planar conductive material and a linear conductive material, and the negative electrode conductive material may be included in an amount of 13 parts by weight or more based on 100 parts by weight of the negative electrode active material layer.

More specifically, in another exemplary embodiment of the present specification, the negative electrode active material layer may include a negative electrode active material, a negative electrode conductive material, and a negative electrode binder, the negative electrode conductive material may include a planar conductive material, and the planar conductive material may be included in an amount of 15 parts by weight or more based on 100 parts by weight of the negative electrode active material layer.

In the present specification, the planar conductive material may be included in an amount of 15 parts by weight or more and 40 parts by weight or less, specifically, 20 parts by weight or more and 35 parts by weight or less, and preferably, 20.91 parts by weight or more and 30 parts by weight or less based on 100 parts by weight of the negative electrode active material layer.

When the planar conductive material falls within the above range, a conductive path is secured, while the surface hardness of the negative electrode active material layer can be appropriately reduced to make it soft, allowing pressure to be evenly transmitted to the soft negative electrode active material layer in the pressing step during lithium transfer and preventing heat from accumulating in any specific region during pre-lithiation. At the same time, the negative electrode active material can be included in an appropriate amount, preventing the electrode from becoming excessively thick.

The positive electrode may include a positive electrode current collector layer and a positive electrode active material layer formed on at least one surface of the positive electrode current collector layer and including the positive electrode active material.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 $\mu$m to 500 $\mu$m, and fine irregularities may be formed on a surface of the positive electrode current collector layer to increase the adhesion of the positive electrode active material. For example, the positive electrode current collector layer may be used in various forms, such as a film, a sheet, a foil, a net, a porous body, a foamed body, a non-woven body, and the like.

According to an exemplary embodiment of the present specification, the positive electrode active material may include one or more selected from the group consisting of lithium manganese oxide, lithium cobalt oxide, lithium nickel oxide, lithium iron oxide, lithium aluminum oxide, or a lithium composite oxide containing a combination thereof.

Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.5$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as it has electronic conductivity without causing a chemical change in a battery to be configured. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The solvent used in the positive electrode composition slurry may be a solvent that is generally used in the relevant technical field, and may include dimethyl sulfoxide (DMSO), isopropyl alcohol, N-methylpyrrolidone (NMP), acetone, or water, and one of these may be used alone, or a mixture of two or more may be used. A used amount of the solvent is sufficient if it can dissolve or disperse the active material, the conductive material, and the binder in consideration of an applied thickness of a slurry and a manufacturing yield, and then, allows for a viscosity capable of exhibiting excellent thickness uniformity when applied to manufacture a positive electrode and a negative electrode. Alternatively, the positive electrode and the negative electrode may be manufactured by laminating, on a current collector, a film obtained by casting the composition for active material layer formation on a separate support and peeling off it from the support.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the migration of electrolyte solution ions is preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/-methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, ethyl methyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolytic solution with high electric conductivity may be prepared, and therefore, may be more preferably used.

A lithium salt may be used as the metal salt, and the lithium salt is a material that is readily soluble in the nonaqueous electrolytic solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

Whether a lithium secondary battery manufactured according to an exemplary embodiment of the present specification was manufactured by the manufacturing method of the present specification can be confirmed by performing a cross-sectional shape analysis of an electrode using a SEM (Scanning Electron Microscope) or a composition analysis of an electrode using an EDS (Energy Dispersive Spectrometer).

An exemplary embodiment of the present specification provides a battery module including the lithium secondary battery as a unit cell and a battery pack including the same.

In addition, another exemplary embodiment of the present specification provides a battery pack including the lithium secondary battery.

Since the lithium secondary battery according to the exemplary embodiments of the present specification stably exhibits excellent discharge capacity, output characteristics and cycle performance, it can be used as a power source for a portable device such as a mobile phone, a laptop computer, and a digital camera, as well as a medium to large sized device selected from the group consisting of an electric vehicle, a hybrid electric vehicle, a plug-in hybrid electric vehicle, and a power storage system. For example, the battery module or battery pack may be used as a power source for one or more medium to large sized devices, such as a power tool; an electric car such as an electric vehicle (EV), a hybrid electric vehicle, and a plug-in hybrid electric vehicle (PHEV); or a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**Example 1**

**<Preparation of Negative Electrode>**

A negative electrode active material layer composition was prepared by mixing a silicon-based active material (average particle size (D50): 6.6 $\mu$m), a plate-like conductive material A (SFG-6L), a conductive material B (SWCNT), and polyacrylamide and styrene butadiene rubber (SBR) as a binder in a weight ratio of 69.71:20.91:0.35:6.24:2.79. A negative electrode slurry (solid concentration: 28 wt%) was prepared by adding the composition to distilled water as a solvent for formation of a negative electrode slurry.

In this case, the plate-like conductive material A (SFG-6L) is a planar conductive material with a BET specific surface area of 17 m$^2$/g, a D10 of 1.7 $\mu$m, a D50 of 3.5 $\mu$m, and a D90 of 6.8 $\mu$m, and the conductive material B (SWCNT) has a BET specific surface area of about 1,000 to 1,500 m$^2$/g and an aspect ratio of 10,000 or greater.

As a mixing method, the conductive material A, the conductive material B, the binders, and water were dispersed at 2500 rpm for 30 minutes using a homo mixer, the negative electrode active material was added to the dispersion, and the resulting mixture was dispersed at 2500 rpm for 30 minutes to prepare a negative electrode slurry.

The negative electrode slurry was coated on both surfaces of a copper current collector layer (thickness: 15 $\mu$m) serving as a negative electrode current collector with a capacity of 3.675 mAh/cm$^2$, which was then roll-pressed and dried in a vacuum oven at 130°C for 10 hours to form a negative electrode active material layer (thickness: 58 $\mu$m) with a surface hardness as shown in Table 1 below.

Lithium metal (thickness: 6.2 $\mu$m) was transferred on top of the negative electrode active material layer for pre-lithiation with a capacity of 1.28 mAh/cm$^2$, resulting in a negative electrode (thickness: 62 $\mu$m) having the highest surface temperature as shown in Table 1 below.

**Example 2**

A negative electrode (thickness: 62 $\mu$m) of Example 2 having the highest surface temperature shown in Table 1 below was prepared in the same manner as in Example 1, except that a negative electrode active material layer composition was prepared by mixing a silicon-based active material (average particle size (D50): 6.6 $\mu$m), a plate-like conductive material A (SFG-6L), a conductive material B (SWCNT), and polyacrylamide and styrene butadiene rubber (SBR) as a binder in a weight ratio of 73.83:16.24:0.37:6.61:2.95, and then a negative electrode slurry (solid concentration: 28 wt%) prepared by adding the composition to distilled water as a solvent for formation of a negative electrode slurry was used to form a negative electrode active material layer (thickness: 57 $\mu$m) having the surface hardness shown in Table 1 below.

**Comparative Example 1**

A negative electrode (thickness: 53 μm) of Comparative Example 1 having the highest surface temperature shown in Table 1 below was prepared in the same manner as in Example 1, except that a negative electrode active material layer composition was prepared by mixing a silicon-based active material (average particle size (D50): 6.6 μm), a conductive material B, and a polyacrylamide binder in a weight ratio of 88.5:0.44:11.06, and then a negative electrode slurry (solid concentration: 28 wt%) prepared by adding the composition to distilled water as a solvent for formation of a negative electrode slurry was used to form a negative electrode active material layer (thickness: 48 μm) having the surface hardness shown in Table 1 below.

**Comparative Example 2**

A negative electrode (thickness: 58 μm) of Comparative Example 2 having the highest surface temperature shown in Table 1 below was prepared in the same manner as in Example 1, except that a negative electrode active material layer composition was prepared by mixing a silicon-based active material (average particle size (D50): 6.6 μm), a plate-like conductive material A, a conductive material B, and a polyacrylamide binder in a weight ratio of 80:9.6:0.4:10, and then a negative electrode slurry (solid concentration: 28 wt%) prepared by adding the composition to distilled water as a solvent for formation of a negative electrode slurry was used to form a negative electrode active material layer (thickness: 52 μm) having the surface hardness shown in Table 1 below.

**Comparative Example 3**

A negative electrode (thickness: 55 μm) of Comparative Example 3 having the highest surface temperature shown in Table 1 below was prepared in the same manner as in Example 1, except that a negative electrode active material layer composition was prepared by mixing a silicon-based active material (average particle size (D50): 6.6 μm), a plate-like conductive material A, a conductive material B, a polyacrylamide binder, and styrene butadiene rubber (SBR) in a weight ratio of 85.14:3.4:0.43:7.63:3.4, and then a negative electrode slurry (solid concentration: 28 wt%) prepared by adding the composition to distilled water as a solvent for formation of a negative electrode slurry was used to form a negative electrode active material layer (thickness: 50 μm) having the surface hardness shown in Table 1 below.

**Comparative Example 4**

A negative electrode (thickness: 59 μm) of Comparative Example 4 having the highest surface temperature shown in Table 1 below was prepared in the same manner as in Example 1, except that a negative electrode active material layer composition was prepared by mixing a silicon-based active material (average particle size (D50): 6.6 μm), a plate-like conductive material A, a conductive material B, and polyacrylamide and styrene butadiene rubber (SBR) as a binder in a weight ratio of 77.85:11.68:0.39:6.97:3.11, and then a negative electrode slurry (solid concentration: 28 wt%) prepared by adding the composition to distilled water as a solvent for formation of a negative electrode slurry was used to form a negative electrode active material layer (thickness: 54 μm) having the surface hardness shown in Table 1 below.

In Examples 1 and 2 and Comparative Examples 1 to 4 prepared according to the preparation example, before transfer of lithium metal, the surface hardness of the surface portion of each negative electrode active material layer where lithium metal was to be transferred was measured in a displacement control method (using the NX10 commercially available from Park Systems Corp.) while indenting a surface of each negative electrode active material layer with a diamond-made indenter at the same indentation speed of 3000 nm/min to an indentation depth of 5 μm, and the results are shown in Table 1 below.

In addition, for the negative electrodes of Examples 1 and 2 and Comparative Examples 1 to 4 prepared according to the preparation example, the surface temperature was measured until 1 hour after the completion of pre-lithiation (i.e., after the color of the negative electrode surface changed to green, purple, or the like) by bringing a thermocouple into contact with the surface where lithium metal was transferred, and the highest temperature among them is shown in Table 1 below.

[Table 1]

| | Example 1 | Example 2 | Comparative Example 1 | Comparative Example 2 | Comparative Example 3 | Comparative Example 4 |
|---|---|---|---|---|---|---|
| Surface hardness (MPa) | 56.575 | 63.389 | 81.987 | 69.463 | 71.699 | 69.592 |

(continued)

| | Example 1 | Example 2 | Comparative Example 1 | Comparative Example 2 | Comparative Example 3 | Comparative Example 4 |
|---|---|---|---|---|---|---|
| Highest surface Temperature (°C) | 34.7 | 34.8 | 69.0 | 41.7 | 53.1 | 40.5 |

**<Experimental Example>**

Whether ignition occurred in lithium secondary batteries including the negative electrodes of Examples 1 and 2 and Comparative Examples 1 to 4 prepared according to the preparation example is shown in Table 2 below. 'X' refers to no occurrence of ignition, and '○' refers to occurrence of ignition.

[Table 2]

| | Example 1 | Example 2 | Comparative Example 1 | Comparative Example 2 | Comparative Example 3 | Comparative Example 4 |
|---|---|---|---|---|---|---|
| Whether or not occurrence of ignition | X | X | ○ | X | ○ | X |

As can be seen in Table 1 above, in Comparative Examples 1 and 3 containing a very small amount of negative electrode conductive material, it was confirmed that the surface hardness of the negative electrode active material layer was as high as 70 MPa or greater, resulting in uneven pressure distribution in the pressing step during lithium transfer, thereby causing heat to accumulate in specific areas during the pre-lithiation, with the maximum surface temperature of the negative electrode rising significantly to 53°C or higher, resulting in the occurrence of ignition.

In Comparative Examples 2 and 4 in which the planar conductive material was included in an amount of about 10 parts by weight based on 100 parts by weight of the total negative electrode active material layer, the surface hardness of the negative electrode active material layer as low as 70 MPa or less, compared to Comparative Examples 1 and 3 including a small amount of the negative electrode conductive material itself, resulting in the maximum surface temperature of the negative electrode of about 40 to 41°C and no occurrence of ignition. However, the risk of ignition was high during the subsequent additional winding stage, so the winding process could not be performed.

In Examples 1 and 2, in which the planar conductive material was included in an amount of 15 parts by weight or more based on 100 parts by weight of the total negative electrode active material layer, it was confirmed that the surface hardness was as low as 65 MPa or less, compared to Comparative Examples 1 to 4, resulting in even pressure transmission in the pressing step during lithium transfer compared to Comparative Examples 1 to 4 in which the surface hardness exceeded 65 MPa, thereby preventing heat accumulation in specific areas and allowing for the significantly low maximum surface temperature of the negative electrode of 35°C or lower. This confirmed that no ignition occurred in the lithium secondary battery.

In conclusion, the present invention can significantly reduce the risk of ignition due to heat accumulation during the winding process and the like by maintaining the maximum temperature of the surface of the negative electrode at 35°C or lower after completion of the pre-lithiation, which can be achieved by adjusting the composition conditions of the negative electrode active material layer, particularly the content of the planar conductive material, to lower the surface hardness to 65 MPa or less, thereby enabling even pressure transmission in the pressing step during lithium transfer.

<Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

**Claims**

1.  A method for manufacturing a negative electrode for a lithium secondary battery, the method comprising:

    forming a negative electrode by transferring a lithium metal layer to at least one surface of a negative electrode active material layer comprising a negative electrode active material, a negative electrode conductive material, and a negative electrode binder,
    wherein after the transfer of the lithium metal layer, a maximum temperature on a surface of the negative electrode is 35°C or lower.

2.  The method of claim 1, further comprising forming the negative electrode active material layer comprising the negative electrode active material, the negative electrode conductive material, and the negative electrode binder, on at least one surface of a negative electrode current collector layer.

3.  The method of claim 1, wherein the negative electrode conductive material comprised in the negative electrode active material layer comprises one or more selected from the group consisting of a planar conductive material and a linear conductive material, and
    wherein the negative electrode conductive material is comprised in an amount of 13 parts by weight or more based on 100 parts by weight of the negative electrode active material layer.

4.  The method of claim 1, wherein the negative electrode conductive material comprised in the negative electrode active material layer comprises a planar conductive material, and
    wherein the planar conductive material is comprised in an amount of 15 parts by weight or more based on 100 parts by weight of the negative electrode active material layer.

5.  The method of claim 1, wherein a surface hardness of the negative electrode active material layer is 65 MPa or less.

6.  The method of claim 1, wherein the negative electrode active material comprises a silicon-based active material, and
    wherein the silicon-based active material comprises one or more selected from the group consisting of Si, $SiO_x$ ($0 < x < 2$), Si/C, and a Si alloy.

7.  The method of claim 1, wherein in the forming of the negative electrode by transferring the lithium metal layer, a thickness of the lithium metal layer is in a range of 1 $\mu$m or greater and 10 $\mu$m or less.

8.  A lithium secondary battery comprising:

    a positive electrode for the lithium secondary battery;
    a negative electrode for a lithium secondary battery manufactured according to the manufacturing method of any one of claims 1 to 7;
    a separator provided between the positive electrode for a lithium secondary battery and the negative electrode for a lithium secondary battery; and
    an electrolyte.

9.  A lithium secondary battery comprising:

    a positive electrode;
    a pre-lithiated negative electrode;
    a separator; and
    an electrolyte,
    wherein the pre-lithiated negative electrode comprises a negative electrode current collector layer and a negative electrode active material layer on at least one surface of the negative electrode current collector layer, and
    wherein a surface hardness of the negative electrode active material layer is 65 MPa or less.

10. The lithium secondary battery of claim 9, wherein the negative electrode active material layer comprises a negative electrode active material, a negative electrode conductive material, and a negative electrode binder,

    wherein the negative electrode conductive material comprises one or more selected from the group consisting of a planar conductive material and a linear conductive material, and

wherein the negative electrode conductive material is comprised in an amount of 13 parts by weight or more based on 100 parts by weight of the negative electrode active material layer.

11. A battery module comprising the lithium secondary battery of claim 8 or 9.

12. A battery pack comprising the lithium secondary battery of claim 8 or 9.

13. A battery pack comprising the battery module of claim 11.

[Figure 1]

**(a)**

START

FORM NEGATIVE ELECTRODE BY TRANSFERRING LITHIUM METAL LAYER TO ONE SURFACE OF NEGATIVE ELECTRODE ACTIVE MATERIAL LAYER INCLUDING NEGATIVE ELECTRODE ACTIVE MATERIAL, NEGATIVE ELECTRODE CONDUCTIVE MATERIAL, AND NEGATIVE ELECTRODE BINDER — S1

END

**(b)**

START

PREPARE TRANSFER LAMINATE INCLUDING LITHIUM METAL LAYER AND BASE MATERIAL LAYER — S10

BRING TRANSFER LAMINATE INTO CONTACT SUCH THAT LITHIUM METAL LAYER FACES ONE SURFACE OF NEGATIVE ELECTRODE ACTIVE MATERIAL LAYER — S11

SEPARATE BASE MATERIAL LAYER FROM LITHIUM METAL LAYER — S12

END

[Figure 2]

| 10 | } 100 |
| 20 | |

[Figure 3]

## INTERNATIONAL SEARCH REPORT

| International application No. |
| --- |
| **PCT/KR2024/015370** |

| | |
| --- | --- |
| **A. CLASSIFICATION OF SUBJECT MATTER** | |
| **H01M 4/1395**(2010.01)i; **H01M 4/62**(2006.01)i; **H01M 4/04**(2006.01)i; **H01M 4/38**(2006.01)i; **H01M 4/48**(2010.01)i; **H01M 4/583**(2010.01)i; **H01M 10/052**(2010.01)i; **H01M 4/02**(2006.01)i | |
| According to International Patent Classification (IPC) or to both national classification and IPC | |

| | |
| --- | --- |
| **B. FIELDS SEARCHED** | |
| Minimum documentation searched (classification system followed by classification symbols) | |
| H01M 4/1395(2010.01); H01M 10/052(2010.01); H01M 10/0525(2010.01); H01M 4/02(2006.01); H01M 4/04(2006.01); H01M 4/133(2010.01); H01M 4/134(2010.01); H01M 4/38(2006.01); H01M 4/62(2006.01) | |
| Documentation searched other than minimum documentation to the extent that such documents are included in the fields searched | |
| Korean utility models and applications for utility models: IPC as above<br>Japanese utility models and applications for utility models: IPC as above | |
| Electronic data base consulted during the international search (name of data base and, where practicable, search terms used) | |
| eKOMPASS (KIPO internal) & keywords: 리튬 이차전지 (lithium secondary battery), 음극 (anode), 표면 온도 (surface temperature), 리튬층 (lithium layer), 면형 도전재 (planar conductive material), 선형 도전재 (linear conductive material) | |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-057767 A (SEMICONDUCTOR ENERGY LAB CO., LTD.) 26 March 2015 (2015-03-26)<br>See abstract; and paragraphs [0072], [0114], [0141], [0161] and [0176]. | 1-13 |
| A | KR 10-2021-0000983 A (SAMSUNG SDI CO., LTD.) 06 January 2021 (2021-01-06)<br>See entire document. | 1-13 |
| A | JP 2004-259483 A (SUMITOMO ELECTRIC IND. LTD.) 16 September 2004 (2004-09-16)<br>See entire document. | 1-13 |
| A | KR 10-2021-0152556 A (WACKER CHEMIE AG) 15 December 2021 (2021-12-15)<br>See entire document. | 1-13 |
| A | WO 2023-121218 A1 (LG ENERGY SOLUTION, LTD.) 29 June 2023 (2023-06-29)<br>See entire document. | 1-13 |

| | | |
| --- | --- | --- |
| ☐ Further documents are listed in the continuation of Box C. | ☑ See patent family annex. | |

| | | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 February 2025** | **10 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/015370**

| Patent document cited in search report | | | Publication date (day/month/year) | Patent family member(s) | | | Publication date (day/month/year) |
|---|---|---|---|---|---|---|---|
| JP | 2015-057767 | A | 26 March 2015 | JP | 6506513 | B2 | 24 April 2019 |
| | | | | US | 10873072 | B2 | 22 December 2020 |
| | | | | US | 11848439 | B2 | 19 December 2023 |
| | | | | US | 2015-0044560 | A1 | 12 February 2015 |
| | | | | US | 2018-0248169 | A1 | 30 August 2018 |
| | | | | US | 2021-0210744 | A1 | 08 July 2021 |
| KR | 10-2021-0000983 | A | 06 January 2021 | KR | 10-2510890 | B1 | 16 March 2023 |
| | | | | US | 2020-0411844 | A1 | 31 December 2020 |
| JP | 2004-259483 | A | 16 September 2004 | JP | 4329357 | B2 | 09 September 2009 |
| KR | 10-2021-0152556 | A | 15 December 2021 | CN | 113853695 | A | 28 December 2021 |
| | | | | CN | 113853695 | B | 30 January 2024 |
| | | | | DE | 112019007359 | A5 | 17 March 2022 |
| | | | | JP | 2022-534691 | A | 03 August 2022 |
| | | | | JP | 7308295 | B2 | 13 July 2023 |
| | | | | KR | 10-2649226 | B1 | 18 March 2024 |
| | | | | US | 2022-0263145 | A1 | 18 August 2022 |
| | | | | WO | 2020-233799 | A1 | 26 November 2020 |
| WO | 2023-121218 | A1 | 29 June 2023 | CN | 117296167 | A | 26 December 2023 |
| | | | | EP | 4322250 | A1 | 14 February 2024 |
| | | | | JP | 2024-514922 | A | 03 April 2024 |
| | | | | KR | 10-2023-0095579 | A | 29 June 2023 |
| | | | | US | 2024-0213448 | A1 | 27 June 2024 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230136902
- KR 1020240137285

- KR 1020230114731